# EUROPEAN PATENT SPECIFICATION

(11) **EP 3 217 780 B1**
(45) Date of publication and mention of the grant of the patent: **18.09.2019**
(21) Application number: 14905767.1
(22) Date of filing: 14.11.2014
(51) Int. Cl.: A01D 34/78, H01M 2/10, A01D 34/37, A01D 34/58, A01D 69/02

(54) **ELECTRIC LAWN MOWER**
ELEKTRISCHER RASENMÄHER
TONDEUSE À GAZON ÉLECTRIQUE

(43) Date of publication of application: 20.09.2017
(73) Proprietor: Techtronic Industries Company Limited, Tsuen Wan, New Territories (HK)
(72) Inventor: YANG, James Zhaoyun, Dongguan Guangdong (CN)
(74) Representative: Stevenson-Hill, Jack Patrick
(86) International application number: PCT/CN2014/091171
(87) International publication number: WO 2016/074239

(56) References cited:
- EP-A1- 2 534 937
- EP-A2- 0 829 196
- CN-U- 201 663 811
- CN-U- 202 022 113
- CN-U- 202 022 113
- CN-U- 203 575 118
- CN-Y- 2 904 310
- CN-Y- 2 904 310
- JP-A- H05 227 842
- US-A1- 2008 120 955
- US-A1- 2012 227 994

## Description

### FIELD OF THE INVENTION

The present invention relates to an electric lawn mower. More specifically, the present invention relates to an electric lawn mower having a plurality of batteries.

### BACKGROUND

Electric lawn mowers are known in the art and may possess a single or multiple batteries, depending on the design and specifications of the lawn mower. Electric lawn mowers may possess either AC or DC circuits, but those containing batteries typically contain a DC circuit so that they may run directly off of the battery.

Electric lawn mowers which possess a plurality of batteries typically either stack them together to save space and to make the connections easier and closer together, or separate the batteries to far ends of the mower so as to more evenly distribute the battery weight around the chassis. However, stacking the batteries together tends to increase the overall height of the lawn mower as the batteries tend to stick straight up.

In contrast, when the batteries are distributed around the chassis, additional wiring is needed, additional spaces need to be designed into the housing, and/or additional waterproof components may need to be provided, all of which increases manufacturing complexity and/or cost.

Accordingly, there remains a need for a lawn mower having an electric lawn mower having a battery arrangement which reduces the height and dimensions of the lawn mower. There also remains the need for an electric lawn mower having a battery arrangement which is easier to manufacture and/or has a lower manufacturing cost.

According to its abstract, US-A-2012/227994 describes a tool that discharges one battery pack and a charger that simultaneously charges another battery pack to provide for continuous and circular operation of the tool. The ratio of the discharging time to the charging time is approximately 25:35.

According to its abstract, EP-A-2534937 describes an electric lawn mower (1) that includes a mower body (10). The mower body (10) includes an electric motor (13) and a cutting blade (14) rotatably driven by the electric motor (13) for mowing a lawn. The mower body (10) further includes a battery mount device (20) configured to be able to hold a battery (21). The electric motor (13) is driven with a supply of electric power from the battery (21). The battery (21) is mounted to the battery mount device (20) at a mount position that is displaced from an axis (J) of the electric motor (13).

According to its abstract, EP-A-0829196 describes a cutter housing of an electric lawn mower of a walking type that is inclined such that the cutter housing rises in a rearward direction. A battery is mounted to the upper face of a rear portion of the cutter housing. A discharge port for discharging cut grass into a grass bag is formed on a lower face of the rear portion of the cutter housing. An opening area of the discharge port is sufficiently maintained by the rearward rising inclination of the cutter housing. The battery is set to take a forward inclining orientation and the height of the mower body can be held to a low height. Since the battery is arranged above a rear wheel, the weight of the battery is supported by the rear wheels and the load on the front wheels is reduced so that the running direction of the electric lawn mower can be easily changed.

### SUMMARY OF THE INVENTION

The present invention relates to an electric lawn mower containing a chassis and a motor attached to the chassis, in accordance with claim 1. The chassis contains a battery receptacle, and a DC circuit attached to the chassis. The battery receptacle contains a cavity which receives a plurality of batteries. The motor is operatively-connected to a cutting blade, so as to rotate the blade to cut the grass. The DC circuit operatively-connects the cavity with the motor, and when the batteries are received within the cavity, the batteries are operatively-connected to the DC circuit.

Without intending to be limited by theory it is believed that the invention herein possesses one or more advantages such as a reduced height as compared to when the battery is stacked, a reduced manufacturing complexity, a reduced manufacturing cost, reduced need for wiring, improved battery access, easier battery replacement, etc.

### BRIEF DESCRIPTION OF THE DRAWINGS

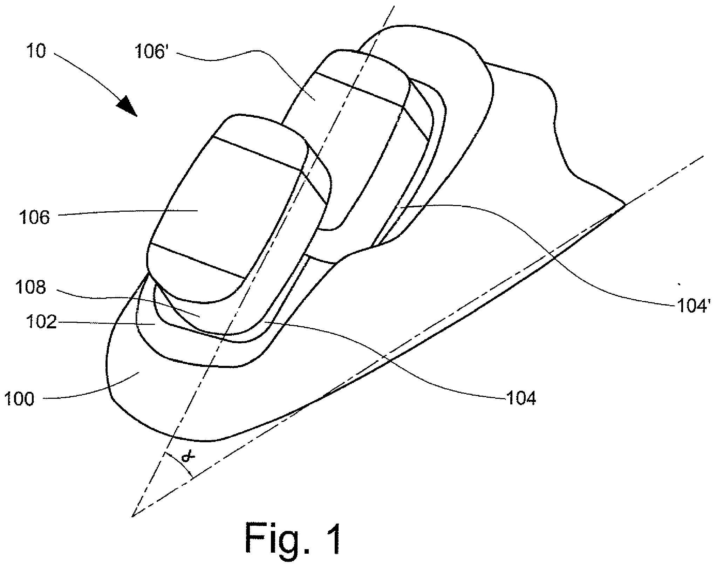

Fig. 1 shows a perspective, partially cut-away view of an embodiment of the present invention.

The figure herein is for illustrative purposes only and is not necessarily drawn to scale.

### DESCRIPTION OF THE PREFERRED EMBODIMENTS

Unless otherwise specifically provided, all tests herein are conducted at standard conditions which include a room and testing temperature of 25 °C, sea level (1 atm.) pressure, and pH 7, and all measurements are made in metric units. Furthermore, all percentages, ratios, etc. herein are by weight, unless specifically indicated otherwise.

An electric lawn mower contains a chassis and a motor attached to the chassis. The chassis contains a battery receptacle, and a DC circuit attached to the chassis. The battery receptacle contains a cavity which receives a plurality of batteries. The motor is operatively-connected to a cutting blade, so as to rotate the blade to cut the grass. The DC circuit operatively-connects the cavity with the motor, and when the batteries are received within the cavity, the batteries are operatively-connected to the DC circuit.

The chassis is typically a wheeled chassis; or a chassis having from about 2 to about 6 wheels, or from about 3 to about 5 wheels; or about 4 wheels. The chassis and the components attache thereto may be designed to maximize stability and/ or balance during the operation of the electric lawn mower. The chassis may be made from materials known in the art such as plastic, metal, fiberglass, a resin, etc.

The motor is typically a DC motor, but may also be, for example, a AC/DC motor, a dual commutator AC/DC motor, etc. as desired. The motor, or the motor output, is operatively-connected to a cutting blade, typically either directly or via a shaft, chain, or other connector. As the motor turns, the blade turns, which cuts the grass. The cutting blade typically contains from about 2 to about 4 cutting edges, or about 2 cutting edges, or about 3 cutting edges, or about 4 cutting edges. Such motors and cutting blades are widely known and available to those skilled in the art.

The chassis herein contains a battery receptacle which is typically formed integrally with the chassis. However, the battery receptacle may also be formed separately from the chassis and then later attached or fixed thereto. The battery receptacle may contain, for example, a removable and/or movable cover to prevent grass or other debris from fouling the battery receptacle. The battery receptacle further contains a cavity for receiving a plurality of batteries. The cavity may be a single cavity for receiving a plurality of batteries, or may be sub-divided into a plurality of cavities each for receiving one or more batteries. In an embodiment herein the number of cavities equals the number of batteries. In an embodiment herein the cavity is divided into a plurality of step-like cavities. In an embodiment herein the cavity is slanted at an angle of from about 15° to about 75°; or from about 20° to about 60°, or from about 25° to about 55 ° from the horizontal. Without intending to be limited by theory, it is believed that such an angle serves a variety of purposes, such as allowing easier placement of the batteries as they may slide into place down the slope formed by the slanted side of the cavity. Such a benefit may be especially useful as batteries can be quite dense and heavy, and the area where they are replaced may be slick and/or slippery.

The cavity, or the plurality of cavities, receives the batteries in a staggered manner. In an embodiment herein, a plurality of cavities receive the batteries in a staggered manner and the cavities are both parallel and slanted at an angle of from about 15° to about 75°; or from about 20° to about 60°, or from about 25° to about 55 ° from the horizontal. Without intending to be limited by theory, it is believed that such an arrangement allows the electric lawn mower to receive multiple batteries in a space-efficient manner which reduces the overall height of the lawn mower, especially as compared to a vertical battery arrangement, or a horizontal arrangement where the batteries are stacked one-upon-the-other.

In an embodiment herein, the battery has a handle, or a handle distal from the electrical connection. Without intending to be limited by theory, it is believed that such a handle may make it easier to hold and carry the battery, especially if it is heavy. Furthermore, by having the handle distal from the electrical connection, it is believed that the battery may be easily lowered into the connection so as to be ready for use.

In an embodiment herein the plurality of batteries is from about 2 batteries to about 10 batteries, or from about 2 to about 4 batteries, or about 2 to about 3 batteries, or about 2 batteries. Without intending to be limited by theory, it is believed that too many batteries becomes too much of a hassle for the user to keep track of, recharge, etc. It is further believed that too few batteries, or a single battery becomes too heavy, unwieldy, and/or may be too slow to recharge. Alternatively, it is also believed that a single large voltage battery can run afoul of certain safety regulations in various countries, and accordingly a plurality of lower voltage batteries connected by the DC circuit in series is sometimes preferred. Thus in an embodiment herein, the DC circuit connects a plurality of batteries in series. Such a design increases total voltage.

In an embodiment herein, the DC circuit connects a plurality of batteries in parallel. Such a design is useful when, for example, greater overall battery capacity is desired.

In an embodiment herein each of the plurality of batteries is of the same voltage and shape. It is believed that such a design allows the batteries to be easily interchanged in the cavity and/or cavities so as to reduce complexity. In an embodiment herein, each of the plurality of batteries has a voltage of from about 9 volts to about 36 volts, or from about 16 volts to about 24 volts, or about 18 volts.

In the present invention, the chassis further contains a DC circuit which operatively-connects the plurality of batteries with the motor. In an embodiment herein, the DC circuit further includes typical lawn mower circuitry such as, but not limited to, controls, safety circuitry, drive and timing circuitry, additional motors for driving one or more wheels, etc. More specifically, the cavity or cavities that receive the batteries are operatively-connected to the DC circuit, so that when the plurality of batteries are placed within the cavity or cavities, the plurality of batteries connect to and power the DC circuit.

Fig. 1 shows a perspective, partially cut-away view of an embodiment of a lawn mower, 10, of the present invention, where a chassis, 100, showing a battery receptacle, 102. The battery receptacle, 102, in Fig. 1 is formed integrally with the chassis, 100. The battery receptacle, 102, contains two cavities, 104 and 104', which each receive a battery, 106 and 106', respectively, which partially overlap each other in a staggered formation. When the batteries, 106 and 106', are placed into and received within the cavities, 104 and 104', then the batteries, 104 and 104', connect to and power the DC circuit (not shown). More specifically, in Fig. 1, each battery, 106, contains an electrical connection (not shown), at the bottom face of battery end, 108. It is here at the electrical connection where the battery, 106, connects to and engages the DC circuit.

In Fig. 1, the cavities, 104, are designed such that the cavities, 104, receive the batteries, 106, in an alignment wherein the batteries, 106, are both staggered and slanted at an angle of about 30 ° from the horizontal. As can be seen, the batteries are arranged in parallel. As noted above, it is believed that such a cavity and battery receptacle design reduces the overall height of the lawn mower as compared to, for example, if the batteries were aligned perpendicular to the horizontal. Also as previously-noted, such an alignment makes it easier for a user to insert the batteries, especially if they are heavy and/or the ground is slippery, such as when it is newly-cut grass or covered with grass clippings. Furthermore, an optional cover (not shown) may close over the battery receptacle, 102, and batteries, 106, so as to reduce or prevent fouling of the battery receptacle, 102 with dirt, dust, grass clippings, etc.

It should be understood that the above only illustrates and describes examples whereby the present invention may be carried out, and that modifications and/or alterations may be made thereto without departing from the scope of the invention as defined by the claims.

It should also be understood that certain features of the invention, which are, for clarity, described in the context of separate embodiments, may also be provided in combination in a single embodiment. Conversely, various features of the invention which are, for brevity, described in the context of a single embodiment, may also be provided or separately or in any suitable subcombination.

## Claims

1. An electric lawn mower (10) comprising:
a chassis (100) comprising:
a battery receptacle (102) comprising a cavity (104, 104) for receiving a plurality of batteries (106, 106); and
a DC circuit; and
a motor attached to the chassis (100) for operatively-connecting to a cutting blade,
wherein the DC circuit is arranged to operatively-connect the cavity (104, 104) with the motor such that when the plurality of batteries (106, 106) are received within the cavity (104, 104) the plurality of batteries (106, 106) are operatively-connected to the DC circuit; and
wherein the cavity (104, 104) is configured to slidingly receive, in a slanted and staggered manner, the plurality of batteries (106, 106).

2. The electric lawn mower (10) according to claim 1, further comprising the plurality of batteries (106, 106).

3. The electric lawn mower (10) according to claim 1 or 2, wherein the plurality of batteries (106, 106) comprises 2 to 10 batteries.

4. The electric lawn mower (10) according to claim 3, wherein the plurality of batteries (106, 106) comprises 2 to 4 batteries.

5. The electric lawn mower (10) according to any one of claims 1 to 4, wherein each of the plurality of batteries (106, 106) is of the same shape and the same voltage.

6. The electric lawn mower (10) according to any one of claims 1 to 5, wherein the DC circuit is arranged to connect the plurality of batteries (106, 106) in series.

7. The electric lawn mower (10) according to any one of claims 1 to 5, wherein the DC circuit is arranged to connect the plurality of batteries (106, 106) in parallel.

8. The electric lawn mower (10) according to any one of claims 1 to 7, wherein each of the plurality of batteries (106, 106) has a voltage of from about 9 volts to about 36 volts.

9. The electric lawn mower (10) according to claim 8, wherein the voltage is from about 16 volts to about 24 volts.

10. The electric lawn mower (10) according to any one of claims 1 to 9, wherein the chassis (100) is a wheeled chassis.

11. The electric lawn mower (10) according to any one of claims 2 to 10, wherein each of the plurality of batteries (106, 106) has a battery end (108) with a bottom face, and an electrical connection arranged at the bottom face for connection to and engagement with the DC circuit.

12. The electric lawn mower (10) according to claim 11, wherein each of the plurality of batteries (106, 106) further includes a handle.

13. The electric lawn mower (10) according to claim 12, wherein the handle is distal from the electrical connection.

14. The electric lawn mower (10) according to any one of claims 1 to 13, wherein the plurality of batteries (106, 106) are arranged to be received in the cavity (104, 104) in parallel.

15. The electric lawn mower (10) according to any one of claims 1 to 14, wherein the cavity (104, 104) is slanted at an angle of about 15° to about 75° from the horizontal so as to slidingly receive the plurality of batteries (106, 106) in the slanted manner.

## Patentansprüche

1. Elektrischer Rasenmäher (10), umfassend:
ein Chassis (100), umfassend:
eine Batterieaufnahme (102), umfassend einen Hohlraum (104, 104) zum Aufnehmen einer Mehrzahl von Batterien (106, 106); und
eine Gleichstromschaltung; und
einen Motor, der an das Chassis (100) zum Wirkverbinden mit einer Schneidklinge befestigt ist,
wobei die Gleichstromschaltung angeordnet ist, um den Hohlraum (104, 104) mit dem Motor wirkend zu verbinden, sodass, wenn die Mehrzahl von Batterien (106, 106) innerhalb des Hohlraums (104, 104) aufgenommen ist, die Mehrzahl von Batterien (106, 106) mit der Gleichstromschaltung wirkverbunden ist; und
wobei der Hohlraum (104, 104) konfiguriert ist, um die Mehrzahl von Batterien gleitend in einer geneigten und versetzten Weise aufzunehmen.

2. Elektrischer Rasenmäher (10) nach Anspruch 1, ferner umfassend die Mehrzahl von Batterien (106, 106).

3. Elektrischer Rasenmäher (10) nach Anspruch 1 oder 2, wobei die Mehrzahl von Batterien (106, 106) 2 bis 10 Batterien umfasst.

4. Elektrischer Rasenmäher (10) nach Anspruch 3, wobei die Mehrzahl von Batterien (106, 106) 2 bis 4 Batterien umfasst.

5. Elektrischer Rasenmäher (10) nach einem der Ansprüche 1 bis 4, wobei jede der Mehrzahl von Batterien (106, 106) die gleiche Form und die gleiche Spannung aufweist.

6. Elektrischer Rasenmäher (10) nach einem der Ansprüche 1 bis 5, wobei die Gleichstromschaltung angeordnet ist, um die Mehrzahl von Batterien (106, 106) in Reihe zu verbinden.

7. Elektrischer Rasenmäher (10) nach einem der Ansprüche 1 bis 5, wobei die Gleichstromschaltung angeordnet ist, um die Mehrzahl von Batterien (106, 106) parallel zu verbinden.

8. Elektrischer Rasenmäher (10) nach einem der Ansprüche 1 bis 7, wobei jede der Mehrzahl von Batterien (106, 106) eine Spannung von etwa 9 Volt bis etwa 36 Volt aufweist.

9. Elektrischer Rasenmäher (10) nach Anspruch 8, wobei die Spannung zwischen etwa 16 Volt und etwa 24 Volt beträgt.

10. Elektrischer Rasenmäher (10) nach einem der Ansprüche 1 bis 9, wobei das Chassis (100) ein Radchassis ist.

11. Elektrischer Rasenmäher (10) nach einem der Ansprüche 2 bis 10, wobei jede der Mehrzahl von Batterien (106, 106) ein Batterieende (108) mit einer Bodenseite und eine elektrische Verbindung aufweist, welche auf der Bodenseite zur Verbindung und zum Eingriff mit der Gleichstromschaltung angeordnet ist.

12. Elektrischer Rasenmäher (10) nach Anspruch 11, wobei jede der Mehrzahl von Batterien (106, 106) ferner einen Griff umfasst.

13. Elektrischer Rasenmäher (10) nach Anspruch 12, wobei der Griff distal im Verhältnis zur elektrischen Verbindung angeordnet ist.

14. Elektrischer Rasenmäher (10) nach einem der Ansprüche 1 bis 13, wobei die Mehrzahl von Batterien (106, 106) angeordnet ist, um in dem Hohlraum (104, 104) parallel aufgenommen zu werden.

15. Elektrischer Rasenmäher (10) nach einem der Ansprüche 1 bis 14, wobei der Hohlraum (104, 104) in einem Winkel von etwa 15° bis etwa 75° zur Horizontalen geneigt ist, um die Mehrzahl von Batterien (106, 106) gleitend in geneigter Weise aufzunehmen.

## Revendications

1. Tondeuse à gazon électrique (10) comprenant :
un châssis (100) comprenant :
un réceptacle de batteries (102) qui comprend une cavité (104, 104) pour recevoir une pluralité de batteries (106, 106) ; et
un circuit courant continu/DC ; et
un moteur qui est fixé au châssis (100) dans le but d'une connexion opérationnelle sur une lame de coupe ;
dans laquelle le circuit courant continu/DC est agencé de manière à ce qu'il connecte de façon opérationnelle la cavité (104, 104) avec le moteur de telle sorte que lorsque les batteries de la pluralité de batteries (106, 106) sont reçues à l'intérieur de la cavité (104, 104), les batteries de la pluralité de batteries (106, 106) soient connectées de façon opérationnelle au circuit courant continu/DC ; et
dans laquelle la cavité (104, 104) est configurée de manière à ce qu'elle reçoive par glissement, d'une manière inclinée et décalée en quinconce, la pluralité de batteries (106, 106).

2. Tondeuse à gazon électrique (10) selon la revendication 1, comprenant en outre la pluralité de batteries (106, 106).

3. Tondeuse à gazon électrique (10) selon la revendication 1 ou 2, dans laquelle la pluralité de batteries (106, 106) comprend 2 à 10 batteries.

4. Tondeuse à gazon électrique (10) selon la revendication 3, dans laquelle la pluralité de batteries (106, 106) comprend 2 à 4 batteries.

5. Tondeuse à gazon électrique (10) selon l'une quelconque des revendications 1 à 4, dans laquelle chacune de la pluralité de batteries (106, 106) est de la même forme et de la même tension.

6. Tondeuse à gazon électrique (10) selon l'une quelconque des revendications 1 à 5, dans laquelle le circuit courant continu/DC est agencé de manière à ce qu'il connecte la pluralité de batteries (106, 106) en série.

7. Tondeuse à gazon électrique (10) selon l'une quelconque des revendications 1 à 5, dans laquelle le circuit courant continu/DC est agencé de manière à ce qu'il connecte la pluralité de batteries (106, 106) en parallèle.

8. Tondeuse à gazon électrique (10) selon l'une quelconque des revendications 1 à 7, dans laquelle chacune de la pluralité de batteries (106, 106) présente une tension qui va d'environ 9 volts à environ 36 volts.

9. Tondeuse à gazon électrique (10) selon la revendication 8, dans laquelle la tension va d'environ 16 volts à environ 24 volts.

10. Tondeuse à gazon électrique (10) selon l'une quelconque des revendications 1 à 9, dans laquelle le châssis (100) est un châssis sur roulettes.

11. Tondeuse à gazon électrique (10) selon l'une quelconque des revendications 2 à 10, dans laquelle chacune de la pluralité de batteries (106, 106) comporte une extrémité de batterie (108) avec une face de fond, et une connexion électrique qui est agencée au niveau de la face de fond dans le but d'une connexion sur le circuit courant continu/DC et d'un engagement avec ce même circuit.

12. Tondeuse à gazon électrique (10) selon la revendication 11, dans laquelle chacune de la pluralité de batteries (106, 106) inclut en outre une poignée.

13. Tondeuse à gazon électrique (10) selon la revendication 12, dans laquelle la poignée est distale par rapport à la connexion électrique.

14. Tondeuse à gazon électrique (10) selon l'une quelconque des revendications 1 à 13, dans laquelle la pluralité de batteries (106, 106) est agencée de manière à ce qu'elle soit reçue à l'intérieur de la cavité (104, 104) en parallèle.

15. Tondeuse à gazon électrique (10) selon l'une quelconque des revendications 1 à 14, dans laquelle la cavité (104, 104) est inclinée selon un angle d'environ 15° à environ 75° par rapport à l'horizontale de manière à ce qu'elle reçoive par glissement la pluralité de batteries (106, 106) selon une manière inclinée.
